# EUROPEAN PATENT APPLICATION

(11) **EP 0 769 243 A1**
(43) Date of publication of application: **23.04.1997**
(21) Application number: 96116570.1
(22) Date of filing: 16.10.1996
(51) Int. Cl.: A01G 27/04

(54) **A system for automatic watering of plants in pots**

(30) Priority: 20.10.1995 DK 1185/95
(71) Applicant: Olesen, Finn Lykke, 9500 Hobro (DK)
(72) Inventor: Olesen, Finn Lykke, 9500 Hobro (DK)
(74) Representative: Nielsen, Leif

(57) **Abstract**

The invention relates to a system for automatic watering of pot plants (3) in pots (1) that comprise a bottom (4) and lateral walls (6). The system comprises a distance member (9) and a carrier plate (10) for carrying the soil in the pot and designed to interact with the distance member (9) to form a reservoir (11) between the carrier plate (10) and the bottom (4) of the pot (1). The carrier plate (10) may be positioned at different levels to adjust the size of the reservoir (11). The carrier plate (10) consists of a central part (20) and flanges (23) projecting from an edge area of the central part (20). The flanges (23) have outer ends (25) designed to contact an inner side (27) of the lateral walls (6) of the pot (4). The flanges (23) may be bent in an obtuse angle in relation to the central part (20) so that the carrier plate (10) is adaptable to pots of different geometrical cross-sections and different sizes. In a preferred embodiment the system further comprises a float pipe (12) and a float (13) provided with a marker (14). By means of these parts it is possible to read the water level in the reservoir between the carrier plate and the bottom of the pot. The float pipe (12), the float (13) and the marker (14) are preferably mutually telescopable in order to be adaptable to pots of different heights.

## Description

The present invention relates to a system for automatic watering of pot plants in pots comprising a bottom, an opening and lateral walls, said system comprising at least a carrier plate and a distance member, wherein the distance member provides a distance between the bottom of the pot and an underside of the carrier plate for formation of a reservoir in the lower part of the pot, and wherein a passage is provided between an upper part of the pot and the reservoir in the lower part of the pot.

FR 1,537,593 describes different embodiments of systems for automatic watering of pot plants. Fig. 3 and Fig. 4 of the publication describe a carrier plate provided with flanges. However, the system in said figures does not comprise a distance member. The distance between the underside of the carrier plate and the bottom of the pot is provided by the carrier plate having a well-defined circumference in relation to the pot in which the carrier plate is arranged so that the carrier plate has a diameter that is larger than the diameter of the pot bottom. The flanges provide support for the carrier plate contact against an inner side of the lateral walls of the pot.

That carrier plate possesses several disadvantages. First, it is only possible to use the carrier plate in pots that have sizes fitting the well-defined size of the carrier plate so that when placed in the pot the carrier plate will be positioned in an adequate level, not too high but also not so low that no reservoir is formed under the carrier plate. Furthermore, it is necessary that the pot with which the carrier plate is to be used has the same cross-section as the carrier plate. If the carrier plate is circular, the pot must also be circular; if the carrier plate is quadrangular, the pot must also be quadrangular, etc. Finally, it is necessary that the pot with which the carrier plate is to be used is conical. The carrier plate cannot be used in a cylindrical pot.

Thus, it is the object of the present invention to provide a system for use in automatic watering of pot plants, wherein the carrier plate can be used in different pots independent of the sizes, cross-sections and shapes of the pots.

This object is achieved by a system characterised in that the distance member comprises devices for support of the carrier plate, and that the carrier plate comprises flanges extending from a central part of the carrier plate away from the central part, and that the flanges have outer ends, which form an outer circumference of the carrier plate, and which are designed to contact an inner side of the lateral walls of the pot.

A system comprising a distance member and also comprising a carrier plate supported by the distance member makes it possible to adapt the carrier plate and its position in the pot to many different pots.

The distance member is dimensioned so that it may be placed on the bottom of substantially any pot having a certain minimum diameter. The carrier plate is supported by the distance member and the central part of the carrier plate has a dimension determining the limit of the smallest pot size with which a carrier plate of given measures may be used. The extension of the distance member is smaller than the extension of the central part of the carrier plate.

The flanges extend outward from the central part to the inner side of the lateral walls of the pot. If the pot has a smaller dimension, the flanges will extend in a small obtuse angle α, primarily upward in relation to the central part of the carrier plate. If the pot has a larger dimension, the flanges will extend in a larger obtuse angle α, primarily outward in relation to the central part of the carrier plate.

In a preferred embodiment the system also comprises a float pipe, a float and a marker characterised in that the float pipe extends from the bottom of the pot upward in direction of the opening of the pot, that the float pipe is provided with a lower opening and an upper opening, that the float extends inside the float pipe, that the float is provided with the marker, which extends through the upper opening of the float pipe, and that the float pipe consists of a first pipe positioned inside a second pipe, and that the first pipe and the second pipe are mutually displaceable.

The marker is fastened to the float in such a manner that the marker may be displaced telescopically in relation to the float corresponding to the telescopic displacement of the first pipe and the second pipe constituting the float pipe according to the preferred embodiment. For this purpose the float is provided with an upward oriented pipe section fastened in a hole in the float. The float is provided with a downward oriented shaft designed to extend into the small pipe section so that the float and marker are connected by the pipe section. The shaft of the marker may be displaced axially in relation to the pipe section in order to adjust the marker position in relation to the float and thus in relation to the pot height.

The distance member and the carrier plate are preferably manufactured in such a manner that the carrier plate may be positioned at different levels. In this manner it is possible for example to position the carrier plate at a high level if the pot is a high pot. The possibility of placing the carrier plate at different levels may also be an advantage in respect of the type of plant that is planted in the pot. Some types require much water in which case the carrier plate must be positioned at a high level in order to make the reservoir under the carrier plate a large one, whereas other types of plants require less water and thus the carrier plate must be positioned at a lower level.

The carrier plate may be positioned at different levels owing to the fact that the central part of the carrier plate is provided with an opening, that tracks extend away from an edge area the opening, and that the tracks comprise at least one short track and one long track, that the distance member consists of a central part, that rails extend away from the central part, and that the tracks in the carrier plate are designed to engage with the rails

If the short tracks in the carrier plate are brought into engagement with the rails on the central part, the carrier plate may only be displaced a short distance down over the rails and will thus be positioned at a high level. If, on the other hand, the long tracks are brought into engagement with the rails on the central part, the carrier plate may be displaced a longer distance down over the rails and will thus be positioned at a low level.

The number of tracks in the carrier plate and how many different lengths of tracks the carrier plate may be provided with may vary. In a preferred embodiment the number of tracks amounts to three equally short tracks and three equally long tracks.

The carrier plate and the flanges it comprises are preferably produced from polypropylene.

The invention will now be described in farther detail with reference to the accompanying drawing, wherein
- Fig. 1: is a perspective view of a pot with a plant and with the system according to the invention positioned in the pot,
- Figs. 2A and 2B: are a plan view, respectively a sectional view, of an embodiment of a carrier plate constituting part of the system according to the invention,
- Figs. 3A and 3B and 3C: are a first plan view and a second plan view, respectively a sectional view, of an embodiment of a distance member constituting part of the system according to the invention,
- Fig. 4: is a sectional view of a small pot with the system according to the invention positioned in the pot along with a float pipe according to the invention, and
- Fig. 5: is a sectional view of a larger pot with the system according to the invention positioned in the pot along with a float pipe according to the invention.

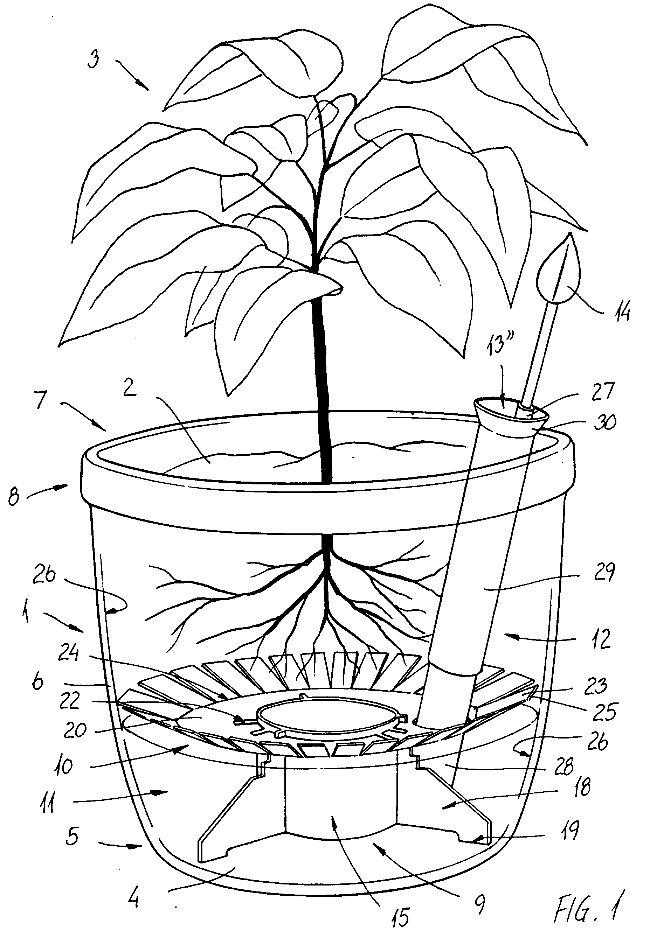

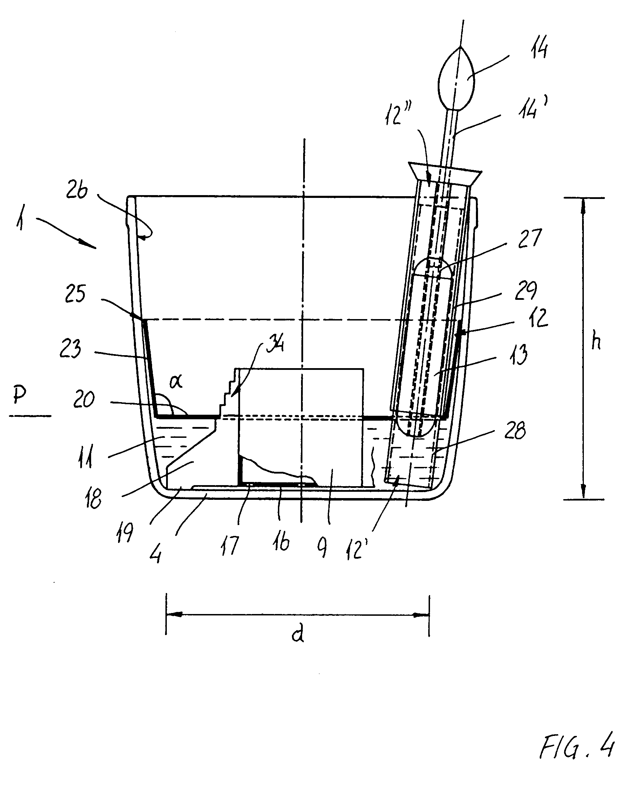

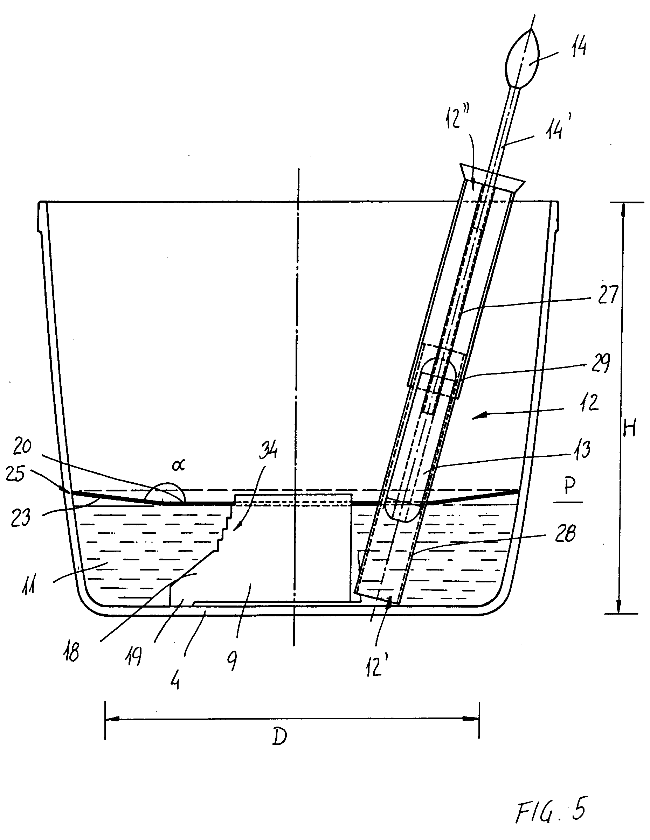

Fig. 1 illustrates a pot 1 with soil 2, in which pot 1 a plant 3 is placed. The pot 1 may be any type. The pot 1 comprises a bottom 4 in a lower part 5 of the pot 1. The pot 1 farther comprises lateral walls 6 and an opening 7 in an upper part 8 of the pot 1. Positioned in the pot 1 are a distance member 9 and a carrier plate 10. The carrier plate 10 is designed to carry the soil 2 in the pot 1. Between the carrier plate 10 and the bottom 4 of the pot 1 a reservoir 11 is formed for liquid for the plant 3. Also positioned in the pot 1 is a float pipe 12 wherein a float 13 (not shown) is arranged. The float is provided with a marker 14. The float pipe 13 has a lower opening 13' (see Fig. 4 and Fig. 5) leading into the reservoir 11 and an upper opening 13'' oriented upward. The marker 14 extends through said upper opening 13''.

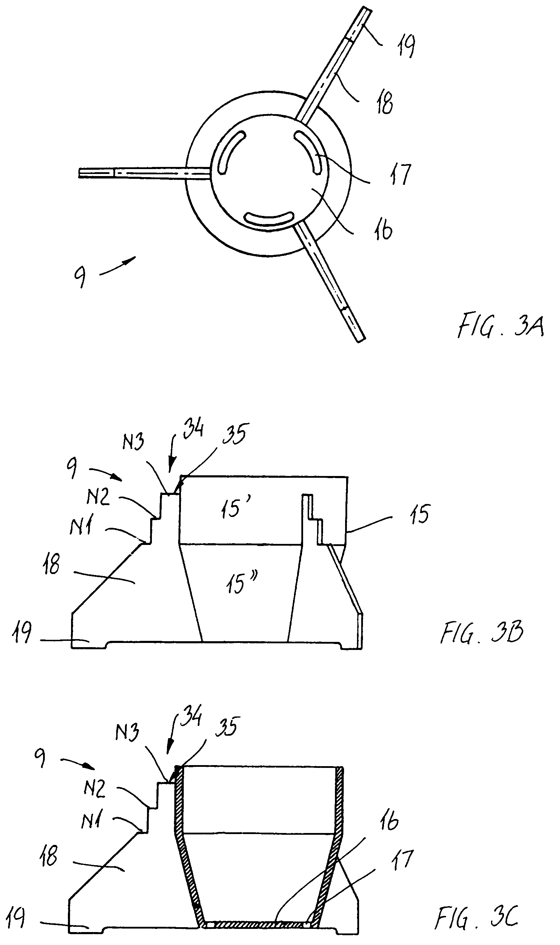

The distance member 9 comprises a central part 15 provided with a bottom 16 (see Fig. 3) with openings 17 (see Fig. 3) for inlet of water to the plant 3 from the reservoir 11 in the lower part 5 of the pot 1. The distance member 9 is provided with rails 18 extending from the central part 15. The rails 18 are provided with feet 19, which ensure a stable position of the distance member 9 on the bottom 4 of the pot 1 and provide a slight elevation of the central part 15 in relation to the bottom 4 of the pot 1.

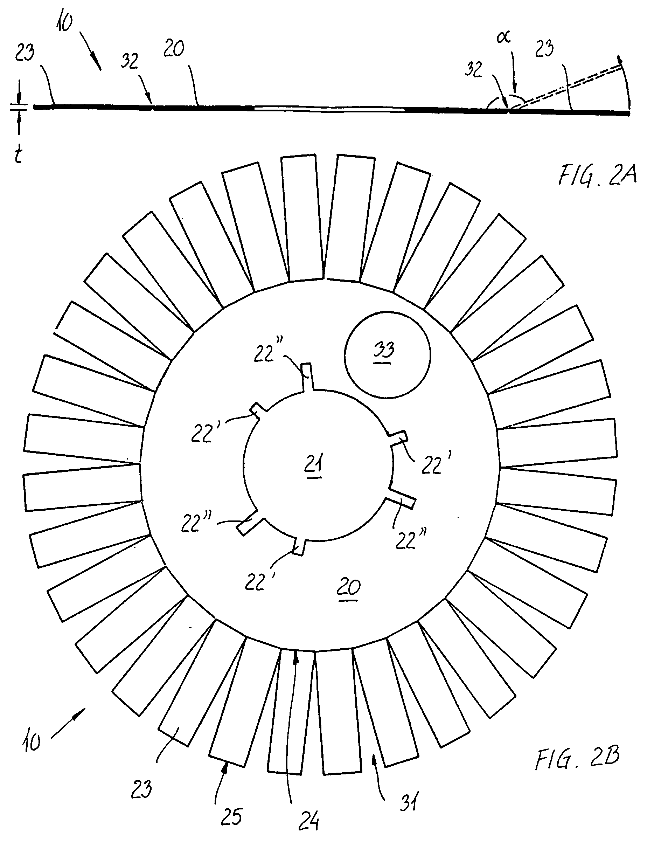

The carrier plate 10 of the embodiment shown is circular. The carrier plate 10 comprises a central part 20 provided with a central opening 21 (see Fig. 2), which co-operates with the central part 15 of the distance member 9. Tracks 22 project radially from the edge area 24 of the central part 20 of the carrier plate 10. The flanges 23 have outer edges 25, which contact an inner side 26 of the lateral walls 6 of the pot 1.

The float 13 and the marker 14 are interconnected by means of a pipe section 27. The pipe section 27 extends inside a hole 13' (see Fig. 4 and Fig. 5) in the float 13 and around a shaft 14' on the marker 14. The float pipe 12 of the embodiment shown consists of a first pipe 28 with a diameter d and a second pipe 29 with a diameter D, which is larger than the diameter d. The first pipe 28 is telescopically displaceable inside the second pipe 29. The second pipe 29 is provided with a collar 30.

Fig. 2A and Fig. 2B illustrate an embodiment of a carrier plate 10 according to the invention. The carrier plate 10 of the embodiment shown is circular and comprises the central part 20 and the flanges 23, which extend from the edge area 24 of the central part 20. The central part 20 is provided with the opening 21, which is positioned in the centre of the central part 20. The tracks 22 extend outward from the opening 21. In the embodiment shown the central part 20 is provided with three short tracks 22' and three long tracks 22''. The flanges 23 are formed by punching out parts in areas 31 between the flanges 23 of a carrier plate that has formed the basis of production of the carrier plate 10. The flanges 23 may be displaced in an obtuse angle α in relation to a plane P (see Fig. 4 and Fig. 5) of the central part of the carrier plate 10 around a hinge joint 32. The hinge joint 32 is formed by a reduction of the thickness t of the carrier plate 10 along the edge area 24 of the central part 20. The central part 20 of the carrier plate 10 is provided with a hole 33. The hole 33 is designed to receive the float pipe 12 so that it may extend in the entire height of the pot 1 through the carrier plate 10.

The tracks 22 in the central part 20 are intended to enter into engagement with the rails 18 on the distance member 9. If the short tracks 22' are brought into engagement with the rails 18, the carrier plate 10 will be positioned at an upper level (see Fig. 5) over the bottom 4 of the pot 1. The carrier plate 10 is positioned at the upper level if the reservoir 11 between the carrier plate 11 and bottom 4 of the pot 1 is to have a certain size, e.g. if the pot 1 is large or the plant 3 in the pot 1 requires much water. If the long tracks 22'' of the carrier plate 10 are brought into engagement with the rails 18, the carrier plate 10 will be positioned at a lower level (see Fig. 4). This is so if the pot 1 is smaller or if the plant 3 in the pot 1 does not require much water.

The carrier plate 10 is preferably produced from polypropylene and in the embodiment shown the central part 20 of the carrier plate 10 has a diameter of about 120 mm and the whole carrier plate 10 a diameter of about 200 mm when the angle α is 180 degrees and the flanges 23 are located in the plane P of the central part 20. The thickness t of the carrier plate 10 in the embodiment shown is about 2 mm.

Fig. 3 illustrates an embodiment of a distance member 9 according to the invention. In the embodiment shown, the central part 15 of the distance member 9 consists of a circular cylindrical pipe section 15' and a circular conical pipe section 15''. The conical pipe section 15'' leads into the bottom 16, which is provided with openings 17. As mentioned, the distance member 9 is provided with rails 18 extending radially from the central part 15. The feet 19 of the rails 18 extend downward so that the feet 19 extend into a plane p that is lower than a plane B in which the bottom 16 extends. The rails 18 are provided with a levelling 34, which provides a first lower level N1, a second middle level N2 and a third upper level N3, each having a contact surface 35. The contact surfaces 35 are designed to constitute contact surfaces for the carrier plate 10.

The openings 17 in the bottom 16 of the central part 15 of the distance member 9 ensure that when watering the plant 3 water may be led through the central part 15 and through the openings 17 in bottom 16 down into the reservoir 11 and after watering it may be led from the reservoir 11 up through the openings 17 in the bottom 16 and up into the central part 15 to the soil 2 in the pot 1. The soil 2 will extend down into the central part 15.

Fig. 4 illustrates a cross-section through a small pot 1 in which the system according to the invention is positioned. In the embodiment shown the pot 1 is slightly conical in downward direction with a bottom diameter d and a height h. The distance member 9 is arranged in the centre of the bottom 4 of the pot 1. The rails 18 on the distance member 9 in the embodiment shown are provided with a levelling 34 having four levels. The carrier plate 10 is arranged at the first lower level N1. The reservoir 11 between the carrier plate 10 and the bottom 4 of the pot 1 contains water. The flanges 23 extending from the central part 20 of the carrier plate 10 are bent in a minimal obtuse angle α and the outer edges 25 of the flanges 23 are contacting the inner side 26 of the side walls 6 of the pot 1.

The figure also illustrates the float pipe 12 consisting of the first pipe 28, which is telescopically inserted into the second pipe 29. The float 13 is placed inside the first pipe 28 and is connected with the marker 14 by means of the pipe section 27. The float pipe 12 extends from the bottom 4 of the pot 1 through the hole 33 in the central part 20 of the carrier plate 10 to the upper end 8 of the pot 1.

Fig. 5 illustrates a cross-section through a larger pot 1 in which the system according to the invention is positioned. The pot 1 in the embodiment shown is slightly conical in downward direction with a bottom diameter D and a height H. The distance member 9 is positioned in the middle of the bottom 4 of the pot 1. The rails 18 of the distance member 9 in the embodiment shown are provided with a levelling N having four levels. The carrier plate is arranged at the fourth upper level. The reservoir 11 between the carrier plate 10 and the bottom 4 of the pot 1 contains water. The flanges 23 extending from the central part 20 of the carrier plate 10 are bent in a substantially maximal obtuse angle α and the outer edges 25 of the flanges 23 are contacting the inner side 26 of the side walls 6 of the pot 1.

The figure also illustrates the float pipe 12 consisting of the first pipe 28, which is telescopically inserted into the second pipe 29. The float 13 is arranged inside the first pipe 28 and is connected with the marker 14 by means of the pipe section 27. The second pipe 29 is telescoped out a larger distance from the bottom 4 of the pot 1 as the pot 1 is higher than the small pot 1 illustrated in fig. 4. Thus, the float pipe 12 still extends from the bottom 4 of the pot 1 through the hole 33 in the central part 20 of the carrier plate 10 to the upper part 8 of the pot 1.

The invention is described above with reference to specific embodiments of pots, distance members, carrier plates and furthermore to specific embodiments of float pipes and marker. However, it will be possible to use the system according to the invention for many different types of pots, both low and high ones as well as conical or cylindrical and round or quadrangular or with other geometrical shapes. Likewise, the choice of material for the various parts of the system may also be both plastic and metallic materials, preferably plastic, however.

## Claims

1. A system for automatic watering of plants (3) in pots (1), which comprise a bottom (4), an opening (7) and lateral walls (6), said system comprising at least one distance member (9) and a carrier plate (10), wherein the distance member (9) provides a distance between the bottom (4) of the pot (1) and the carrier plate (10) to form a reservoir (11) in the lower part (5) of the pot (1), and wherein a passage is provided between the upper part (8) of the pot (1) and the reservoir (11) in the lower part (5) of the pot (1), **characterised** in that the distance member (9) comprises devices for support of the carrier plate (10), and that the carrier plate (10) comprises flanges (23) extending from a central part (20) of the carrier plate (10) away from the central part (20), and that the flanges (23) have outer ends (25), which form an outer circumference of the carrier plate (10), and which are designed to contact an inner side (27) of the lateral walls (6) of the pot (1).

2. A system according to claim 1, **characterised** in that it further comprises a float pipe (12) extending from the bottom (4) of the pot (1) upward in direction of the opening (7) of the pot (1), that the float pipe (12) is provided with a lower opening (12') and an upper opening (12''), that a float (13) extends inside the float pipe (12), and that the float (13) is provided with a marker (14) extending through the upper opening (12'') of the float pipe (12).

3. A system according to claim 2, **characterised** in that that float pipe (12) consists of a first pipe (28) positioned inside a second pipe (29), and that the first pipe (28) and the second pipe (29) are mutually displaceable.

4. A system according to any one of the preceding claims, **characterised** in that the central part (20) of the carrier plate (10) is provided with an opening (21), that tracks (22) extend away from the opening (21), and that the tracks (22) comprise at least one short track (22') and one long track (22''), that the distance member consists of a central part (15), that rails (18) extend away from the central part (15), and that the tracks (22) in the carrier plate (10) are designed to engage with the rails (18).

5. A system according to any one of the preceding claims, **characterised** in that the central part (20) of the carrier plate (10) comprises a hole (33) designed to provide a passage for the float pipe (12) from a lower part (5) of the pot (1) to an upper part (8) of the pot (1) through the carrier plate (10).

6. A system according to claim 1, **characterised** in that the central part (20) of the carrier plate (10) is circular, and that in a position in which the flanges (23) are in level with a plane (P) of the central part (20) of the carrier plate (10), the outer ends (25) of the flanges (23) form a substantially circular circumference.

7. A system according to any one of claims 2 or 3, **characterised** in that the float (13) and the marker (14) are interconnected by means of a tubular piece (27) extending into a hole (13') in the float (13) and extending around a shaft (14') of the marker (14).

8. A system according to any one of the preceding claims, **characterised** in that the central part (20) of the carrier plate (10) has a diameter of between 60 and 180 mm, preferably of 120 mm, and that the whole carrier plate (10) has a diameter of between 100 and 300 mm, preferably of 200 mm, when the angle α is 180 degrees and the flanges (23) are in the plane (P) of the central part (20).

9. A system according to any one of the preceding claims, **characterised** in that the carrier plate (20) is provided with three short tracks (22') of equal length and with three long tracks (22'') of equal length, and that the tracks (18) are provided with a two-level levelling (N).

10. A use of the system according to any one of the preceding claims in ceramic pots.
